# EUROPEAN PATENT SPECIFICATION

(11) **EP 1 105 800 B1**
(45) Date of publication and mention of the grant of the patent: **31.12.2008**
(21) Application number: 99944975.4
(22) Date of filing: 24.08.1999
(51) Int. Cl.: G06F 9/54, G06Q 90/00, H04N 7/15

(54) **IMPROVEMENTS IN, OR RELATING TO, TELESERVICE MANAGEMENT SYSTEMS**
VERBESSERUNGEN AN, BZW. IM BEZUG AUF TELEDIENSTMANAGEMENT SYSTEME
AMELIORATIONS APPORTEES A DES SYSTEMES DE GESTION DE TELESERVICES

(30) Priority: 25.08.1998 SE 9802843; 13.07.1999 SE 9902684
(43) Date of publication of application: 13.06.2001
(73) Proprietor: TELIASONERA AB, 106 63 Stockholm (SE)
(72) Inventor: BJÖRKMAN, Nils, S-118 64 Stockholm (SE); CSELENYI, Istvan, S-136 63 Haninge (SE); ELLDIN, Jonas, S-118 54 Stockholm (SE); GISGARD, Christer, S-122 48 Enskede (SE); LATOUR-HENNER, Alexander, S-132 33 Saltsjö-Boo (SE); LUNDBERG, Torbjörn, S-131 31 Nacka (SE); ÖSUND, Stefan, S-138 35 Älta (SE)
(74) Representative: Hopfgarten, Nils
(86) International application number: PCT/SE1999/001446
(87) International publication number: WO 2000/011887

(56) References cited:
- EP-A2- 0 717 544
- WO-A1-98/57286
- US-A- 5 594 859
- US-A- 5 809 237
- GEORGE ORPHANOS ET AL: 'An Intergrated Application-Service Platform to Support Multimedia Applications' IEEE INTERNATIONAL CONFERENCE ON COMMUNICATIONS, 1994 vol. 3, May 1994, pages 1722 - 1726, XP000438787

## Description

The present invention relates to a teleservice management system, adapted to support the provision of a plurality of teleservices and including a service user terminal having means adapted to display a service control graphical user interface according to the preamble of claim 1 and a method of managing a plurality of teleservices according to the preamble of claim 10.

The first worldwide telecommunication system, i.e. the digital telephone network, has been working for many years. The allocation of resources with guaranteed service quality requirements, such as low delay and delay variation, for this single-service system was also solved a long time ago. Resource management is much more complicated in the case of broadband integrated services networks which support several multimedia, multi-connection, multi-party services with different requirements.

In the case of normal telephony, the source terminal is allocated first, after lifting the phone-receiver, then the network resources are allocated as the CCSS #7 signalling message proceeds through the network and the destination terminal is finally allocated. If the called user answers within a given waiting time, the call is established. Otherwise the allocated resources are released in a reverse order. This Bearer Service Layer protocol does not require management functions in the Teleservice Layer.

Because of the complexity and diversity of broadband teleservices, the management functions have to be divided between the Service Management System (SMS) and the Control Architecture. Since signalling messages in the Teleservice Layer are not yet supported by the current standards, a new protocol has to be designed. This can be considered as third party, overlay signalling, since it is up to the SMS to translate the Teleservice Layer messages to proper bearer signalling messages during call establishment, operation and release. Basically, two type of Bearer Service Layer protocols can be distinguished, the forward and backward allocation, depending on the direction of resource reservation between the source and destination terminals.

The abbreviations that are used in description are explained in the list of abbreviations below.

In our co-pending patent application SE9902679-1 there is described a teleservice management which solves the following problems:
- the TSMS relieves the user from having to provide elaborate and comprehensive technical descriptions in order to invoke the service and to indicate service quality aspects:

- the SU cannot usually express his QoS preference, since the application does not ask him, therefore, the TSMS has an own Service Control interface for interaction with the user; allocation, and release of telecommunication applications and resources in terminals and network;
- co-ordination and integration of telecommunication applications and resources in terminals and network; and
- controlling of resources from the service point of view, thereby maintaining the required quality of service, e.g. adapting resources, such as, communication bearer capabilities, according to different, or shifting, circumstances.

This TSMS provides a general scheme for constructing new teleservice which facilitates the service definition, in general and, in particular, provides a systematic way of handling the different service options, which might otherwise degenerate into an unmanageably large set of possible service variants.

The invention described and claimed in this co-pending application provides a teleservice management system adapted to manage a plurality of complex teleservices. This teleservice management system includes a service control module arranged to provide a user with graphical interface adapted to enable the user to provide data on a required QoS and other parameters, relating to a teleservice which the user wishes to invoke. Means are also provided for storing information relating to service definitions. The teleservice management unit creates an object oriented teleservice model from a request for service, received from said graphical interface via said service control module, using a default mapping between teleservice layer entities and bearer service layer entities.

Two further related inventions are described in our co-pending patent applications listed below. The co-pending patent applications are:
- SE9802544-8, which relates, inter alia, to a signalling protocol for transmission of control messages in a teleservice system of the type disclosed in our co-pending patent application SE 9905679-1, whereas many protocols exist for directly controlling the bearer network resources, e.g. establishing connection with given parameters, the Teleservice Control Protocol (TCP) of our co-pending application SE 9802544-8 is unique in that it controls the teleservice itself, i.e. it operates at a higher level and does not act directly on the resources; and
- SE9802842-6, which relates to a procedure for creating a resource reservation graphs for the resources in terminals and networks using the teleservice description given by the service provider, said procedure being aimed at producing the most complete teleservice configuration consistent with service specific rules - the resource reservation graph is constructed so that a teleservice to which it relates complies with a set of generic rules valid for all multimedia teleservices, or a set of specific rules relating to the teleservice.

US 5 594 859 discloses a graphical user interface for video to support the provision of a teleservice, viz. video conferencing. A video teleconferencing workstation includes a video teleconference session window displayed on the workstation display. The session window includes a video image area for displaying video information associated with the video teleconferencing, and a control area for displaying selectable video conferencing functions. The selectable functions include a connection function, a control function and a monitoring function, the connection function causing a call list to be displayed for establishing video conferencing connections.

The present invention relates, inter alia, to a service control graphical user interface for facilitating communication between a Teleservice Management System and a system user.

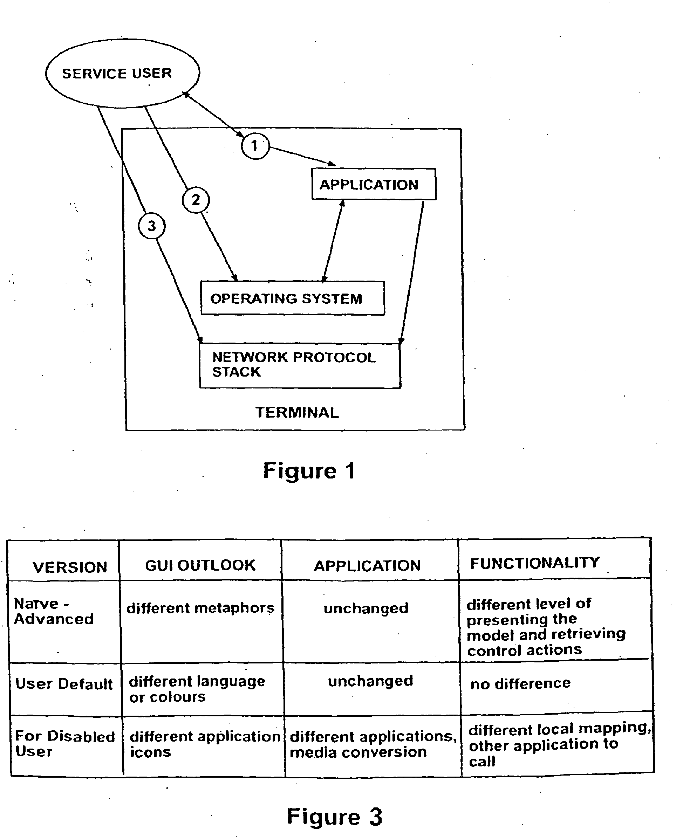

The service control interface, which forms part of the service user terminal diagrammatically illustrated in Figure 1 of the accompanying drawings, is the one which is usually used to provide an interface towards a user of telecommunication services, i.e. an interface which is usually used, at the present time, for facilitating communication between a teleservice system and a system user. It will, however, be seen from the subsequent description that there are several problems with such an interface and that these problems are solved by the service control graphical user interface (SC) of the present invention.

As is diagrammatically illustrated in Figure 1, a teleservice user usually has three interfaces through which he/she can influence the behaviour of the teleservice. Firstly, the telecommunication Application has a control interface which can be graphical, command line, or menu based. Secondly, the user can configure some aspects of terminal resources, for example, the size of the virtual memory and the number of windows, using the control panel of the operating system, for example, Windows. Thirdly, the service user may set different parameters of the network protocol stack, for example, transport protocol and shaping rate, either directly with the API provided by the network driver, or indirectly through the control panel. Since a teleservice session is determined by the user application and the underlying terminal and network resources, at the same time, it would be advantageous to have only one common interface to present the status of all three domains, i.e. the control interfaces 1 to 3 of Figure 1, and take the user's control actions regarding all of these domains.

Even if the Application combines all of the aforementioned control interfaces, the user has to configure the Application, the operating system and the network, usually in terms of the Bearer Layer quantities, for example, the number of frames per second for video and explicit selection of protocol stack, giving ATM shaping rate in kbps. A more abstract description of requirements would be more user friendly for a service user.

The Teleservice Management System (TSMS) is the functional entity in the Teleservice Layer which controls the teleservice in both the service user terminals and the telecommunications network. It uses the resource binding services of the Network Control Architecture.

A Service User (SU), or Party, is an addressable signalling end point associated with a Session. It may be an End-User, or a Service Provider. The former uses the Application and thus also the Teleservice, while the latter provides the Application and the Teleservice. In the case of content-based services, the Service Provider may also provide the content, or there may be a separated Content Provider.

Apart from the communication between the TSMS and the SU, there can be other information which has to be sent to other Service Users (SUs) without being interpreted by either the User Application, or the TSMS. For example, a SU, who is a Teacher, should be able to specify the name of the subject for the students (i.e. other SUs) participating in a Tele-Education session. In order to overcome this problem, the Service Control graphical user interface (SC) should take this information from the SU and present it to other SUs, i.e. the system should be able to support user-to-user communication.

Instead of using the same service control, a teleservice should have different service control versions depending on the usage conditions and the role, the permissions and preference of the Service User. However, the change in outlook, or functionality, should not necessarily be perceived by the TSMS. In other words, a teleservice system should be adapted to support different service control versions.

In addition, the Service Control graphical user interface (SC) should be adapted to use the same protocol towards the TSMS, independently from the teleservice and the metaphors specific to the teleservice.

It is an object of the present invention to provide a teleservice management system, adapted to support the provision of a complex teleservices and including a service user terminal having a service control graphical user interface (SC) which is adapted to resolve the aforementioned problems. This object is obtained by a teleservice management system of the kind defined in the introductory portion and having the characterizing feature of claim 1. Thus, the SC is adapted to solve these problems by providing:
- a single user interface for:
- presenting the status of each of the domains that determine the teleservice: and
- taking the user's control actions for all these domains;
- a user friendly system;
- support for user-to-user communication;
- different service control versions for a teleservice;
- general validity for any teleservice: and
- the network includes a first database adapted to store different service control versions of the same teleservice, a second database adapted to store service control generic components, and service control selection and building means associated with a network part of said teleservice management system and having access to said first and second databases.

It is another object of the present invention to provide a method of managing a plurality of teleservices employing a teleservice management system including a service user terminal having a service control graphical user interface between a service user and the teleservice management system, and adapted to communicate with the service user and the teleservice management system.

This object is obtained by a method of the kind defined in the introductory portion of the description and having the characterizing features of claim 10.

According to a first aspect of the present invention, there is provided, a teleservice management system, adapted to support the provision of a plurality of complex teleservices and including a service user terminal having means adapted to display a service control graphical user interface between a service user and said teleservice management system, said service control graphical user interface is adapted to:
- represent and configure:

- terminal resources;
- network resources; and
- an application required for the provision of a teleservice; and
- transfer user-to-user messages.

The teleservice management system is preferable in two parts, a terminal part being located in each of said terminals and a network part being located in a telecommunications network, and each of said terminals includes a network protocol stack adapted to interact with said terminal part of said teleservice management system, an operating system for said terminal part of said teleservice management system, an application adapted to interact with the service user and said terminal part of said teleservice management system, and a service control graphical user interface adapted to interact with said terminal part of said teleservice management system.

The single interface, provided by said service control graphic user interface, is preferably adapted to undertake the following tasks: present the actual state, and available functions, of a teleservice to the service user; retrieve the requirements, and control actions, of the service user relating to the parameters of the teleservice, said requirements and control actions being expressed in abstract qualitative, or comparative, terms; and take and present the user-to-user messages which are related to the teleservice session.

The service control graphic user interface may be adapted to use metaphors in order to facilitate easy understanding of a graphic display, and said system may be adapted to enable a service user to make control actions, in respect of a teleservice session, using menus and metaphors generated by said service control graphic user interface.

The teleservice management system may be adapted to enable the service user to express service quality in user friendly terms, for example, the service user may express service quality in user friendly terms by requiring a high, medium, or low transfer speed, or a large, medium, or small size picture.

The terminal part of said teleservice management system may be adapted to translate an abstract teleservice description to bearer quantities and configure said application and network drivers of said network protocol stack, in accordance with said bearer quantities. The terminal part of said teleservice management system may be adapted to configure said operating system, as well as said application and said network drivers, in accordance with said bearer quantities.

The teleservice management system may be adapted to facilitate service differentiation using customised service control. In particular, the teleservice management system may be adapted to enable said service user to select a desired service control from different service control versions of the same teleservice, after starting a new session, or after being invited to do so. Each of said service control versions may be adapted to have a different graphic user interface outlook, together with the same, or different, local application and functionality.

The service control graphical user interface may be adapted to reflect the rights and permissions of a service user by presenting only those objects of a teleservice session model that are of relevance to service user.

The teleservice management system may be adapted to:
- enable previously recorded service user interactions to be played back from system files, in order to facilitate testing of said teleservice management system, or to make teleservice more user friendly for service users, and/or
- enable answers given by service users to be emulated by a script language which takes account of information displayed by said service control graphic user interface, and/or
- build a teleservice from generic components on the basis of a description of the teleservice and its configuration and/or,
- provide for platform independence and automatic update and to be built into an operating system.

According to a second aspect of the present invention, there is provided a method for managing a plurality of teleservices employing a teleservice management system including a service user terminal having means adapted to display a service control graphical user interface between a service user and said teleservice management system, said service control graphical user interface:
- represents and configures:
   - terminal resources;
   - network resources; and
   - an application required for the provision of a teleservice; and
   - transferring user-to-user messages,
- said service user selecting a desired service control from different service control versions of the same teleservice, after starting a new session, or after being invited to do so.

The method may be characterised by the service control graphic user interface, undertaking the following tasks: presenting the actual state, and available functions, of a teleservice to the service user; retrieving the requirements, and control actions, of the service user relating to the parameters of the teleservice, and taking and presenting the user-to user messages which are related to the teleservice session.

The method may be characterised by the service user employing menus generated by the service control graphic user interface to make control actions, in respect of a teleservice session. The system may enable the service user to express service quality in user friendly terms. The service user may express service quality in user friendly terms by requiring a high, medium, or low transfer speed. This method may be further characterised by said system enabling the service user to express service quality by requiring a large, medium, or small size picture.

The method may be characterised by said teleservice management system being in two parts, a terminal part and a network part, each terminal including a network protocol stack adapted to interact with the terminal part and by said terminal part configuring the application and network drivers of said terminal's network protocol stack. This method may be further characterised by said terminal part of said teleservice management system configuring said terminal's operating system, as well as said application and said network drivers.

The system may facilitating service differentiation using customised service control.

The method may be characterised by each of said service control versions having a different graphic user interface outlook, together with the same, or different, local application and functionality.

The service control graphical user interface may reflect the role of said service user, said interface operating in both a passive and active manner, depending on the role of said service user.

The service control graphical user interface may reflect the rights and permissions of a service user by presenting only those objects of a teleservice session model that are of relevance to the service user.

The method may be characterised by said system enabling previously recorded service user interactions to be played back from system files to facilitate testing of said teleservice management system, or to make usage of teleservices more user friendly for service users.

The method may be characterised by said system enabling answers given by service user to be emulated by a script language which takes account of information displayed by said service control graphic user interface.

The method may be characterised by said service control graphical user interface building a teleservice from generic components on the basis of a description of the teleservice and its configuration.

The foregoing and other features of the present invention will be better understood from the following description with reference to the following drawings, in which:
Figure 1 diagrammatically illustrates a known Service User (SU) terminal;
Figure 2 diagrammatically illustrates a Service User (SU) graphical terminal of the present invention;
Figure 3 is a table of different service control versions of the same teleservice;
Figure 4 diagrammatically illustrates the applet window of a service control interface, implemented in the EMMA/SIGNE Teleservice Management System, for a video conference service;
Figure 5 diagrammatically illustrates the applet window of a service control interface, implemented in the EMMA/SIGNE Teleservice for a Teleuniversity service;
Figure 6 diagrammatically illustrates the applet window of a service control interface for a student studying art, as part of the Teleuniversity service of Figure 5, without a video connection;
Figure 7 diagrammatically illustrates the applet window of a service control interface, for a student studying art, as part of the Teleuniversity service of Figure 5, with a video connection to a server; and
Figure 8 diagrammatically illustrates the applet window of a service control interface for a serviet0+r to which a student studying art, as part of the Teleuniversity service, has a video connection.

In order to assist the reader to a better understand of this patent specification, a glossary of some the abbreviations used herein is set out below:
- API: Application Provider Interface
- ATM: Asynchronous Transfer Mode
- EMMA: Experimental Middleware for ATM
- GUI: Graphic User Interface
- IRMA: Intelligent Resource Management
- NP: Network Provider
- SC: Service Control graphical user interface
- SIGNE: Signalling Emulator
- SU: Service User
- WWW: World Wide Web

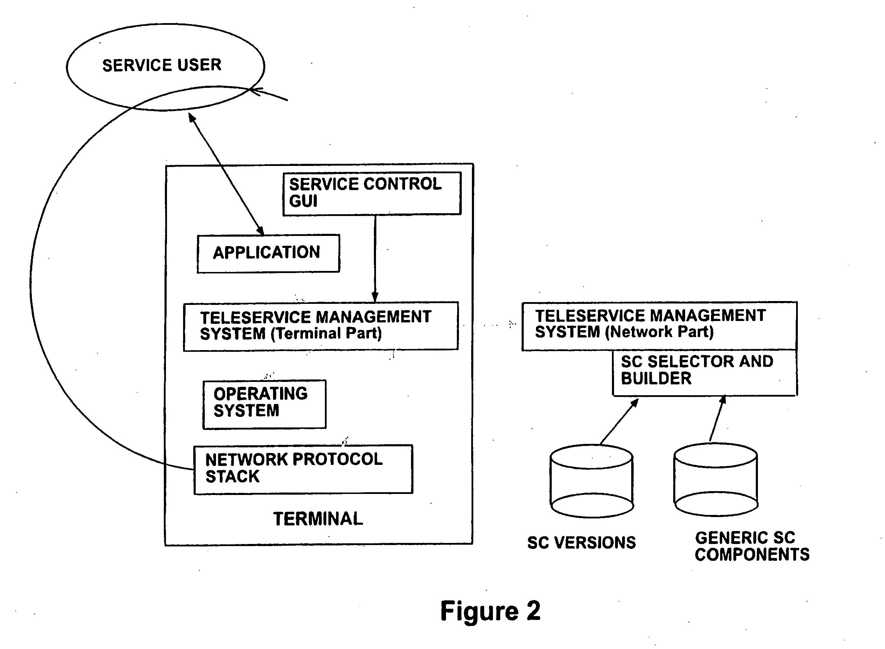

The manager in which the Service Control graphical user interface (SC) of the present invention communicates with a Service User (SU) and the TeleService Management System (TSMS) is diagrammatically illustrated in Figure 2 of the accompanying drawings.

It will be seen from Figure 2 that the teleservice management system, of the present invention, includes a terminal for each service user which provides a service control graphical user interface for a respective user. The teleservice management system is in two parts, i.e. a terminal part and a network part. In practice, the terminal part will be located in each service user terminal of the teleservice management system. Each of the service user terminals also includes a network protocol stack, an operating system, and a service control graphical user interface (GUI), all of which are adapted to interact with the terminal part of the teleservice management system.

The Application, which is located in the terminal and adapted to interact with the service user and the terminal part of the teleservice management system, is the final utility which presents the information delivered by the teleservice to the users and collects the information to be delivered by the teleservice from the users. The Application Layer overlays and uses the services of a Teleservice Layer and provides the utility to the users. However, an Application can have indirect access to a certain subset of the terminal resources in order to change some of their attributes which are of local importance and are, therefore, not involved in the teleservice, for example, audio volume and image contrast.

It will also be seen from Figure 2 that the telecommunications network includes a database adapted to store different service control versions of the same teleservice, a database adapted to store generic service control components and service control selection and building means having access to the two databases.

The different logical layers of a telecommunications network used for delivering teleservices comprise the Application and Teleservice Layers, referred to above, together with a Bearer Service Layer, which overlays a Resource Layer (i.e. network resources and terminal resources) and which is, in turn, overlayed by the Teleservice Layer.

The term Teleservice (or Telecommunication Service) is used for the information transfer service that provides the complete capability for the communication between users and user applications. The Teleservice Layer gives service to the Application Layer in a transparent way and uses the services of the Bearer Service Layer. It includes every function in the terminal equipment and in the network which are related to the delivery of information between terminals, for example, terminal network interface, encryption, combination of separate media, gateway and protocol conversion.

As stated above, the Bearer Service Layer lies directly on top of the Resource Layer and can, therefore, either reserve, or release, connections, i.e. manage terminal and network resources as a service provide to the Teleservice Layer. There is a distributed Control Architecture in the network and the terminal(s) which supports this function.

A Session is an instance of a Teleservice associated with one, or more, parties (or Service User), or a party and a network entity. The term Call, arising from telephony, is often used instead of Session. For the purposes of this patent specification, a Call is a group of bearer connections managed by the Control Architecture.

An Application Provider is the developer and vendor of the Application which is used by the Service Provider either in its original form, or in a customised way.

A Network Provider (NP) provides the teleservice, together with its special functions. Moreover, the NP may provide the Bearer Services through the Network Control Architecture.

As a user interface between a Service User (SU) and the TSMS, the Service Control graphic user interface (SC), of the present invention, has to perform three tasks. The first task of the interface is to present the actual state, and available functions, of the teleservice to the service user. In order to facilitate easy understanding, use is made of metaphors in a life-like framework, for example, in the case of a multimedia conference service, a representation of a conference table is used, together with a large paper in the centre of the table.

The second task of the interface is to retrieve the requirements, and control actions, of the SU relating to the parameters of the teleservice. This is a translation mechanism, in which abstract level user friendly terms are translated to the teleservice model of the system. In other words, the requirements and control actions of the SU are expressed in abstract qualitative, or comparative, terms which are readily understood by the user.

It is much more difficult to retrieve the necessary information in the case of complex broadband teleservices. Firstly, there is a very large number of teleservice parameters. Secondly, it can hardly be assumed that an average service user is able to setup every characteristic of the teleservice, from the network to the Application Layer, which is necessary to determine resource requirements. Naive users prefer to express their wishes in abstract terms. Thirdly, it is probable that neither the End-User, nor the Application Provider is willing to deal with all of these parameters every time a teleservice is invoked.

The third task of the interface is to take and present the user-to-user messages which are related to the teleservice session, i.e. apart from the communication between the TSMS and the SU, there can be other information which has to be sent to their Service Users (SUs) without being interpreted by either the User Application, or the TSMS. For example, in the case of a Tele-Education session, a SU, who is a Teacher would specify the name of the subject for the students (i.e. other SUs) participating in the session, the SC would take this information from the SU and present it to other SUs.

The Service User (SU) can make control regarding the teleservice session using the menus and metaphors of the C. In this way the SU can express service quality in user friendly terms (i.e. qualitative, or comparative, terms), for example, by requiring;
- a high, medium, or low transfer speed; or
- a large, medium, or small size picture.

The terminal part of the TSMS translates the abstract teleservice description to bearer quantities and configures the Application, the network drives (according to the protocol stack) and the operating system (if it is possible) according to these. Thus, the service user has a combined, or common, interface instead of the three separate interfaces 1 to 3 of Figure 1 of the drawings.

Instead of using the same service control, a service user can, in accordance the present invention, select a desired service control from different service control versions of the same teleservice, after starting a new session, or after being invited to do so. The SC can have different versions, each with a different Graphic User Interface (GUI) outlook, a different local application, or a different functionality. However, the TSMS does not perceive these changes, since the parameters regarding the information transfer are unchanged. Figure 3 of the accompanying drawings is a self explanatory table of different service control versions of the same teleservice, together with the respective GUI outlook. Application and Functionality. It will be seen from the three versions listed in Figure 3, namely, Naïve-Advanced, User Default and Disabled Users, that each of the service control versions may have a different graphic user interface (GUI) outlook, together with the same, or different, local application and functionality. Thus, the present invention facilitates service differentiation using customised service control

The present invention is also adapted to reflect the role of a service user. In other words depending on the role of the service user, the service control works both in a passive and active manner. A server-type party does not usually require active involvement in the communication during the lifetime of a session- A logging capability and an event filter-based conditional action is usually sufficient for such a party. Other parties, such as conference participants, need to use the SC in an active manner.

The SC is also adapted to reflect to rights and permissions of a service user. It presents only those objects of the teleservice session model, which are relevant for the specific party and hides the others. For example, a student of a Tele-Education session does not see the names of the other students, but he/she does see the teacher's name, the subject and the media which are used by him/her. Similarly, the level of control actions also corresponds to the party-type. A teacher can change any aspect of the Tele-Education sessions, while the only action that a student can take is to leave the session.

The present invention also caters for special usage conditions. In particular, in order to promote testing of teleservice management systems, or make the usage of teleservices more comfortable/user friendly for service users, previously recorded user interactions can be played back from system files. In addition, the answers given by service users can be emulated by a script language which takes the information recently displayed on the SC into consideration. Furthermore, the output of the SC can be directed into a log-file for debugging, or other purposes.

The present invention facilitates the use of generic service control, i.e. apart from special SCs which are pre-designed by the Service Provider, the SC can be built from generic components (see Figure 2) based on the description of the teleservices and its configuration. For example, the number of displayed icons, representing the participants of a multimedia conference, can be increased if the configuration changes and new parties are invited. The same teleservice is visualised with different service components for different parties. In the case of the conference chairman, each of the displayed icons is associated with a button which, when pressed, invokes a menu. The icon clicking facility is disabled for ordinary conference parties.

The present invention also provides for platform independence and automatic update. The Service Control is preferably implemented in Java, since the object-oriented methodology and the WWW approach are beneficial for a high level interface.

Nationally, the SC of the present invention can be integrated into a teleservice management system for communication with the service users. Moreover, the SC can be integrated into a simple network protocol proxy (agent), as a GUI for advanced, or naïve, users. In this case, only the setting of network parameters is performed without configuring the application and operating system.

The SC of the present invention may also be built into an operating system. This arrangement may yield alteration capabilities in all of the three domains, referred to in preceding paragraphs.

A distinct advantage of the present invention, in comparison to known systems, is that the Graphic User Interface (GUI) of the TeleService Management System (TSMS):
- represents and configures:

- terminal resources,
- network resources,
- application; and
- transfers user-to-user messages, using a single interface.

Furthermore, it will be readily understood by persons skilled in the art that a service control interface having the complete set of features, referred to in preceding paragraphs, is unique.

Based on a sub-set of the described principles, many different experimental SC versions have been implemented, by Telia, for a EMMA/SIGNE TSMS and extensively tested, in-house, for Video Conference, Tele-Education and File Transfer teleservices. It has been verified, by several tests, that the present invention is adequate for configuring a teleservice:
- in user friendly terms;
- for supporting user-to-user communication;
- for providing a customised control interface depending on the role, permissions and preferences of the service user; and
- for running on SUN/Solaris 2.5 and PC/Windows 95 platforms.

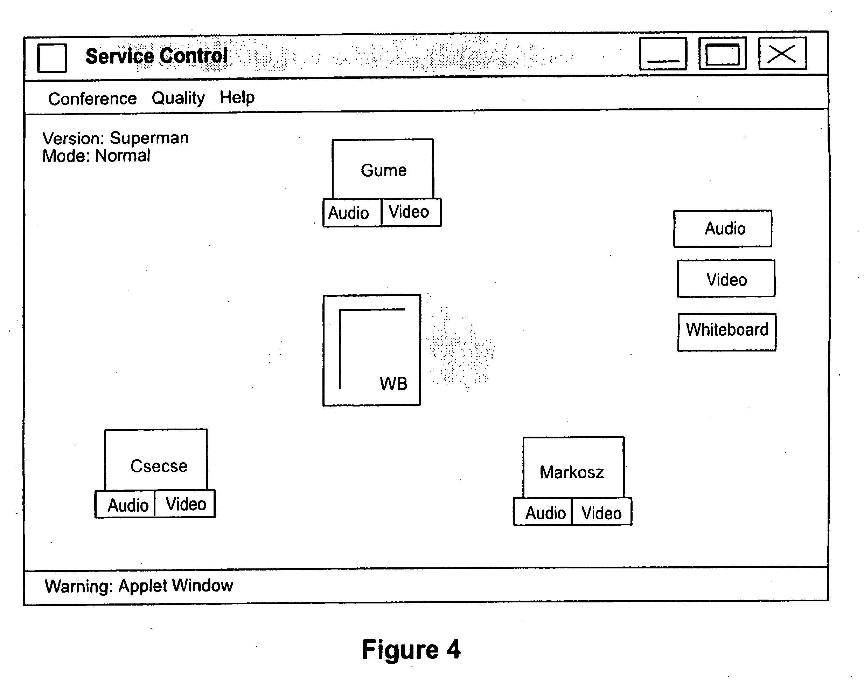

Examples of the SC interfaces of the present invention, which have been implemented in the EMMA/SIGNE TeleService Management System prototype, are diagrammatically illustrated in Figures 4 to 8 of the accompanying drawings.

It will be seen from Figure 4 of the accompanying drawings that the teleservice depicted by this example is a video conference session involving three parties, namely 'Gume', 'Csecse' and 'Markosz', and that the Graphic User Interface (GUI) of the SC shows:
- the party 'Gume' having:
- an audio conference with other two parties, 'Csecse' and 'Markosz'; and
- a video connection to 'Markosz'.

It will also been seen from Figure 4 that the SC version is 'Superman' and is operating in normal mode.

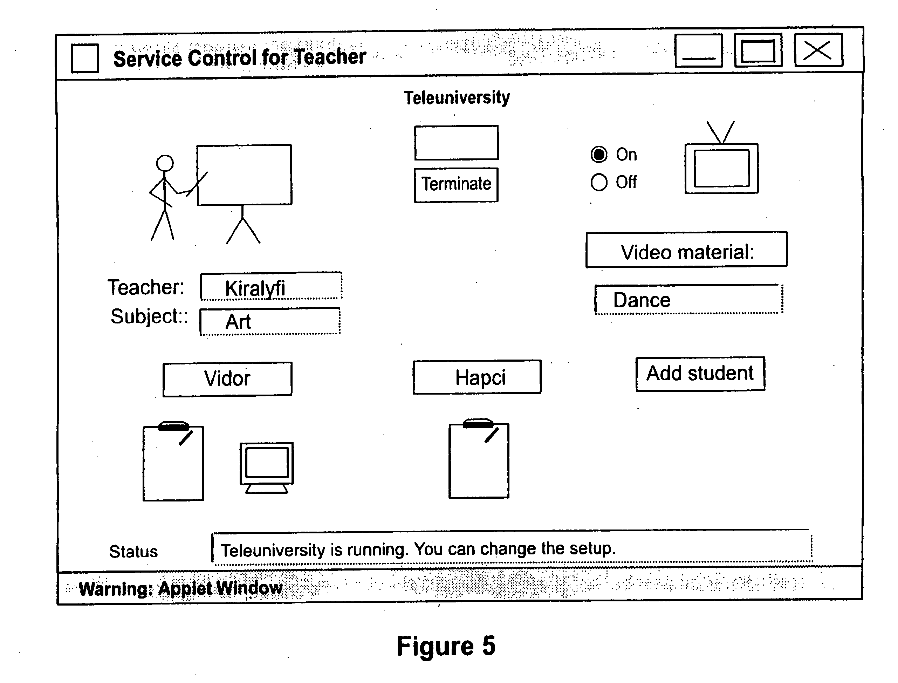

The teleservice example, depicted by Figure 5 of the accompanying drawings, is a Teleuniversity service. The applet window, illustrated in Figure 5, is presented on the teacher's SC.

It will be seen from Figure 5 that:
- the teacher's name is'Mr Kiralyfi';
- the subject being taught is art; and
- two students are involved in the session, namely, 'Vido' and 'Hapci'.

The teacher can see on his SC that:
- both students are using a text-based discussion application (i.e.WinTalk-depicted by the clip board icons) for the communication with him; and
- student 'Vidor' also has a connection to a video server 'Dance' (depicted by the PC screen icon).

The teacher can remove, or change, the students and the video server from the session, or terminate the whole lesson.

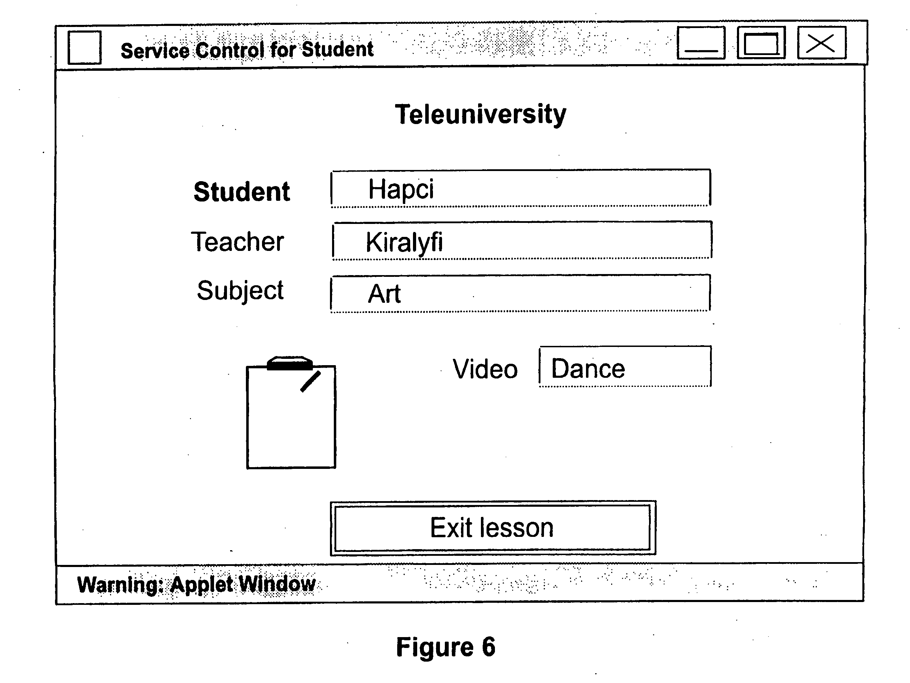

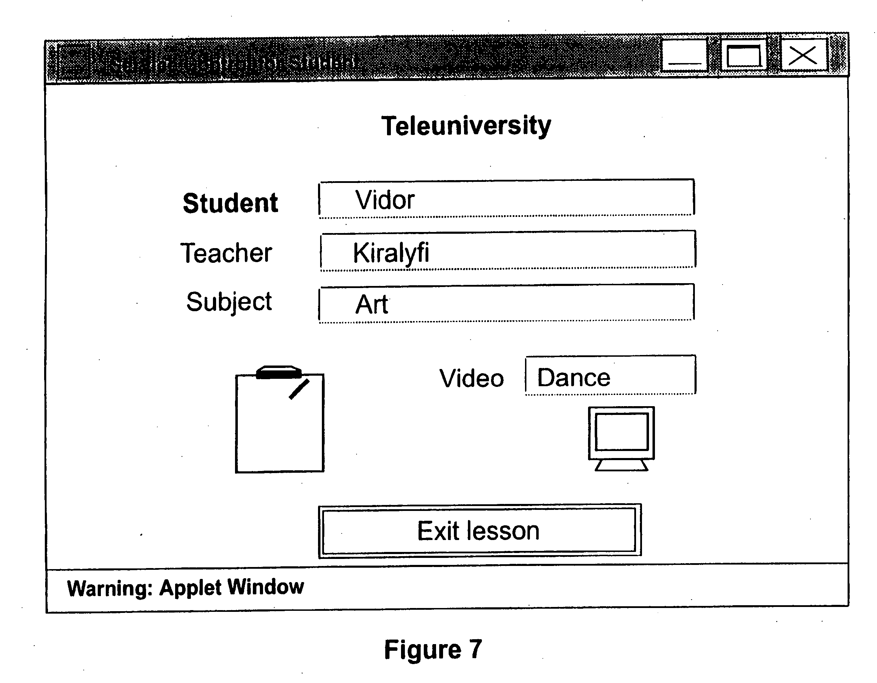

With the Teleuniversity service depicted in Figure 5 of the accompanying drawings, the applet window presented on the SC of student 'Hapci', who is learning 'Art and has no video connection, is diagrammatically illustrated in Figure 6 of the accompanying drawings. The applet window presented on the SC of student 'Vidor', who is also learning 'Art' but has a video connection to the server 'Dance', is diagrammatically illustrated in Figure 7 of the accompanying drawings.

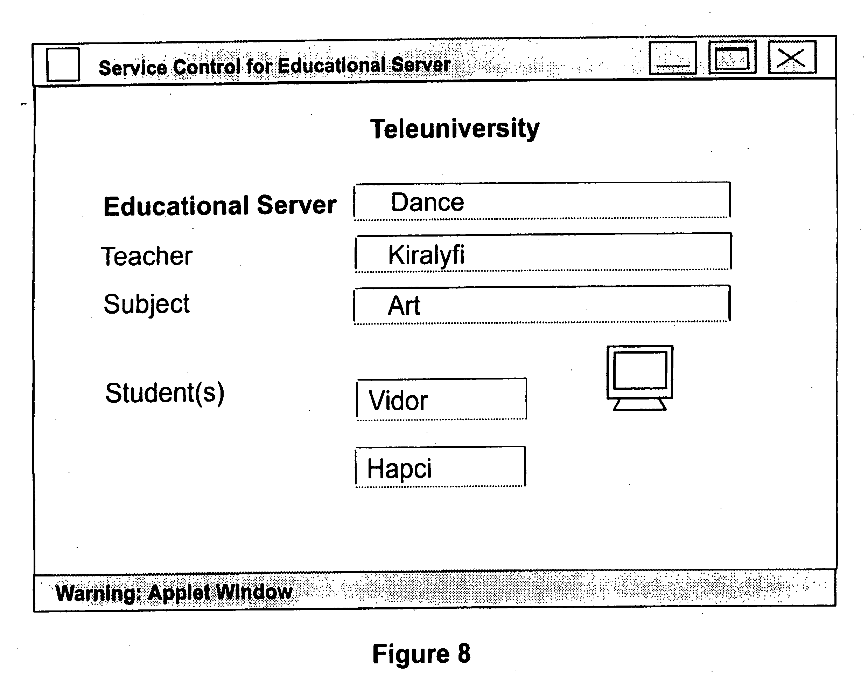

The applet window of the SC of the video server 'Dance' is diagrammatically illustrated in Figure 8 of the accompanying drawings and shows that the student, 'Vidor' has a video connection to the server.

It will be seen from the foregoing description that the teleservice management system of the present invention supports the provision of a plurality of complex teleservices and includes a service user and the teleservice management system, that the service control graphical user interface communicates with, and provides a single interface between, the service user and the teleservice management system, that the single interface is used to represent and configure terminal resources, network resources, and an application required for the provision of a teleservice, and that the system caters for the transfer of user-to-user messages. In particular, the single interface, provided by said service control graphic user interface, undertakes the tasks of presenting the actual state, and available functions, of a teleservice to the service user, retrieves the requirements, and control actions, of the service user relating to the parameters of the teleservice, and takes and presents the user user-to-user messages which are related to the teleservice session. The requirements and control actions are, in practice, expressed in abstract qualitative, or quantitative, terms, i.e. user friendly terms.

## Claims

1. A teleservice management system, adapted to support the provision of a plurality of teleservices and including a service user terminal having means adapted to display a service control graphical user interface between a service user and said teleservice management system, said service control graphical user interface providing representation and configuration of: terminal resources, network resources and an application required for the provision of a teleservice, as well as current state and available functions of the teleservice for the service user, and transmission and presentation of messages between user terminals over a telecommunication network, **characterised in that** said network includes a first database adapted to store different service control versions of the same teleservice, a second database adapted to store service control generic components, and service control selection and building means associated with a network part of said teleservice management system and having access to said first and second databases.

2. A teleservice management system as claimed in claim 1, **characterised in that** said teleservice management system is in two parts, a terminal part provided in each of said terminals and a network part provided in said telecommunications network, **in that** each of said terminals includes a network protocol stack adapted to interact with said terminal part, an operating system for said terminal part and said graphical user interface, and **in that** said application, also provided in the terminal part, is adapted to interact with the service user and said terminal part through presentation of information that is delivered by the teleservice to the user and to collect information that is to be delivered from the user.

3. A teleservice management system as claimed in claim 1, **characterised by** said service control graphic user interface being adapted to:
- retrieve the requirements, and control actions, of the service user relating to the parameters of the teleservice.

4. A teleservice management system as claimed in claims 1 or 2, **characterised by** said system comprising devices to enable a service user to make control actions, in respect of a teleservice session, using menus generated by said service control graphic user interface.

5. A teleservice management system as claimed in claim 4, **characterised by** devices to translate service quality expressed in a picture of a certain size.

6. A teleservice management system as claimed in claim 5, **characterised by** said terminal part of said teleservice management system comprising devices to configure said application and network drivers of said network protocol stack.

7. A teleservice management system as claimed in claim 6, **characterised by** said terminal part of said teleservice management system comprising devices to configure said operating system.

8. A teleservice management system as claimed in any of preceding claim, **characterised by** said system comprising devices to enable previously recorded service user interactions to be played back from system files for testing said teleservice management system, or to make teleservices more user friendly.

9. A teleservice management system as claimed in claim 8, **characterised by** said system comprising an emulator to emulate, by a script language provided to take account of information displayed by said service control graphic user interface, answers given by service users.

10. A method for managing a plurality of teleservices employing a teleservice management system including a service user terminal having means adapted to display a service control graphical user interface between a service user and said teleservice management system, by means of said service control graphical user interface:
- representing and configuring: terminal resources, network resources, and an application required for the provision of a teleservice, as well as current state and available functions of the teleservice for the service user; and
- transmitting and presenting messages between user terminals over a telecommunication network, **characterised by** said service user selecting a desired service control from different service control versions of the same teleservice, after starting a new session, or after being invited to do so, by storing different service control versions of the same teleservice in a first database, storing service control generic components in a second database, and by providing service control selection and building means with access to the two databases.

11. A method as claimed in claim 10, **characterised by** said service control graphic user interface undertaking the following tasks:
- presenting the actual state, and available functions, of a teleservice to the service user;
- retrieving the requirements, and control actions, of the service user relating to the parameters of the teleservice; and
- taking and presenting the user-to-user messages which are related to the teleservice session.

12. A method as claimed in claim 10 or claim 11, **characterised by** the service user employing menus generated by the service control graphic user interface to make control actions in respect of a teleservice session.

13. A method as claimed in claim 12, **characterised by** said service user expressing service quality by requiring a picture of a certain size.

14. A method as claimed in any of claims 10 to 13, **characterised by** said teleservice management system being in two parts, a terminal part and a network part, in that each terminal includes a network protocol stack adapted to interact with the terminal part and in that said terminal part configures application and network drivers of said terminal's network protocol stack.

15. A method as claimed in claim 14, **characterised by** said terminal part of said teleservice management system configuring said terminal's operating system.

16. A method as claimed in claims 15, **characterised by** each of said service control versions having a different graphic user interface outlook, together with the same, or different, local application and functionality.

17. A method as claimed in any of claim 10 to 16, **characterised in that** previously recorded service user interactions are played back from system files for testing said teleservice management system, or to make usage of teleservices more user friendly.

18. A method as claimed in claim 17, **characterised by** emulating answers given by service users using a script language which takes account of information displayed by said service control graphic user interface.

19. A method as claimed in any of claims 10 to 18, **characterised by** said service control graphical user interface building a teleservice from generic components on the basis of a description of the teleservice and its configuration.

## Patentansprüche

1. Teledienstverwaltungssystem, das dazu ausgebildet ist, die Zurverfügungstellung einer Mehrzahl von Telediensten zu unterstützen, und ein Dienstbenutzerendgerät einschließt, das Mittel aufweist, eine graphische Dienststeuerbenutzerschnittstelle zwischen einem Dienstbenutzer und dem Teledienstverwaltungssystem anzuzeigen, welche graphische Dienststenerbenutzerschnittstelle Darstellung und Konfiguration liefert von: Endgeräteressourcen, Netzressourcen und einer Anwendung, die für die Zurverfügungstellung eines Teledienstes erforderlich sind, und auch von dem gegenwärtigen Zustand und von zur Verfügung stehenden Funktionen des Teledienstes für den Dienstbenutzer, und von Übertragung und Darstellung von Meldungen zwischen Benutzerendgeräten über ein Telekommunikationsnetz, **dadurch gekennzeichnet, dass** das Netz eine erste Datenbank, die dazu ausgebildet ist, unterschiedliche Dienststeuerversionen desselben Teledienstes zu speichern, eine zweite Datenbank, die dazu ausgebildet ist, generische Dienststeuerkomponenten zu speichern, und Dienststeuerauswahl- und Aufbaumittel einschließt, die mit einem Netzteil des Teledienstverwaltungssystems verknüpft sind und Zugang zu den ersten und zweiten Datenbanken haben.

2. Teledienstverwaltungssystem nach Anspruch 1, **dadurch gekennzeichnet**e dass das Teledienstverwaltungssystem aus zwei Teilen besteht, einem Endgeräteteil, der in jedem der Endgerät vorgesehen ist, und einem Netzteil, der in dem Telekommunikationsnetz vorgesehen ist, dass jedes der Endgeräte einen Netzprotokollstapel, der dazu ausgebildet ist, mit dem Endgeräteteil zu wechselwirken, ein Betriebssystem für den Endgeräteteil und die graphische Benutzerschnittstelle einschließt, und dass die Anwendung, die auch im Endgeräteteil vorgesehen ist, dazu ausgebildet ist, mit dem Dienstbenutzer und dem Durch Darstellung von Information zu wechselwirken, die durch den Teledienst zum Benutzer geliefert wird, und Information zu sammeln, die vom Benutzer geliefert werden soll.

3. Teledienstverwaltungssystem nach Anspruch 1, **dadurch gekennzeichnet, dass** die graphische Dienststeuerbenutzerschnittstelle dazu ausgebildet ist:
- die Anforderungen und Steueraktionen des Dienstbenutzers, die die Parameter des Teledienstes betreffen, zurückzugewinnen.

4. Teledienstverwaltungssystem nach Anspruch 1 oder 2, **dadurch gekennzeichnet, dass** das System Einrichtungen aufweist, es einem Dienstbenutzer zu ermöglichen, Steueraktionen in Bezug auf die Teledienstsitzung unter Verwendung von Menüs vorzunehmen, die durch die graphische Dienststeuerbenutzerschnittstelle erzeugt werden.

5. Teledienstverwaltungssystem nach Anspruch 4, **gekennzeichnet durch** Einrichtungen zum Übersetzen von Dienstqualität, ausgedrückt in einem Bild einer gewissen Größe.

6. Teledienstverwaltungssystem nach Anspruch 5, **dadurch gekennzeichnet, dass** der Endgeräteteil des Teledienstverwaltungssystems Einrichtungen zum Konfigurieren der Anwendung und Netztreiber des Netzprotokollstapels aufweist.

7. Teledienstverwaltungssystem nach Anspruch 6, **dadurch gekennzeichnet, dass** der Endgeräteteil des Teledienstverwaltungssystems Einrichtungen aufweist, das Betriebssystem zu konfigurieren.

8. Teledienstverwaltungssystem nach einem vorangehenden Anspruch, **dadurch gekennzeichnet, dass** das System Einrichtungen aufweist, dass vorher aufgezeichnete Dienstbenutzerwechselwirkungen von Systemdateien zurückgespielt werden können, um das Teledienstverwaltungssystem zu prüfen oder um Teledienste benutzerfreundlicher zu machen.

9. Teledienstverwaltungssystem nach Anspruch 8, **dadurch gekennzeichnet, dass** das System einen Emulator aufweist, zum durch eine Skriptsprache, die vorgesehen ist, Information zu berücksichtigen, die auf der graphischen Dienststeuerschnittstelle angezeigt wird, Antworten zu emulieren, die durch Dienstbenutzer gegeben werden.

10. Verfahren zum Verwalten einer Vielzahl von Telediensten, das ein Teledienstverwaltungssystem verwendet, das ein Dienstbenutzerendgerät einschließt, das Mittel aufweist, die dazu ausgebildet sind, eine graphische Dienststeuerbenutzerschnittstelle zwischen einem Diensthenutzer und dem Teledienstverwaltungssystem mit Hilfe der graphischen Dienststeuerbenutzerschnittstelle anzuzeigen:
- das Endgeräteressourcen, Netzressourcen und eine Anwendung darstellt und konfigurierte die für die Zurverfügungstellung eines Teledienstes erforderlich sind, und auch den gegenwärtigen Zustand und zur Verfügung stehende Funktionen des Teledienstes für den Teledienstbenutzer; und
- das Meldungen zwischen Benutzerendgeräten über ein Telekommunikationsnetz sendet und präsentiert, **dadurch gekennzeichnet, dass** der Dienstbenutzer eine gewünschte Dienststeuerung aus unterschiedlichen Dienststeuerversionen desselben Teledienstes auswählt, nachdem er eine neue Sitzung begonnen hat oder nachdem er eingeladen ist, dies zu tun, indem unterschiedliche Dienststeuerversionen desselben Teledienstes in einer ersten Datenbank gespeichert werden, generische Dienststeuerkomponenten in einer zweiten Datenbank gespeichert werden, und indem Dienststeuerauswahl und -aufbaumittel mit Zugang zu den beiden Datenbanken zur Verfügung gestellt werden.

11. Verfahren nach Anspruch 10, **dadurch gekennzeichnet, dass** die graphische Dienststeuerbenutzerschnittstelle die folgenden Aufgaben Übernimmt:
- den tatsächlichen Zustand und zur Verfügung stehende Funktionen eines Teledienstes dem Dienstbenutzer zu präsentieren;
- die Anforderungen und Steueraktionen des Dienstbenutzers, die sich auf die Parameter des Teledienstes beziehen, zurückzugewinnen; und
- Benntzer-zu-Benutzer-Meldungen anzunehmen und zu präsentieren, die sich auf die Teledienstsitzung beziehen.

12. Verfahren nach Anspruch 10 oder 11, **dadurch gekennzeichnet, dass** der Dienstbenutzer Menüs verwendet, die durch die graphische Dienststeuerbenutzerschnittstelle erzeugt werden, um Steueraktionen in Bezug auf eine Teledienstsitzung vorzunehmen.

13. Verfahren nach Anspruch 12, **dadurch gekennzeichnet, dass** der Dienstbenutzer Dienstqualität ausdrückt, indem er ein Bild einer gewissen Größe erfordert.

14. Verfahren nach einem der Ansprüche 10 bis 13, **dadurch gekennzeichnet, dass** das Teledienstverwaltungssystem aus zwei Teilen besteht, einem Endgeräteteil und einem Netzteil, dass jedes Endgerät einen Netzprotokollstapel einschließt, der dazu ausgebildet ist, mit dem Endgeräteteil zu wechselwirken, und dass der Endegeräteteil Anwendung und Netztreiber des Netzprotokollstapels des Endgerätes konfiguriert.

15. Verfahren nach Anspruch 14, **dadurch gekennzeichnet, dass** der Endgeräteteil des Teledienstverwaltungssystems das Betriebssystem des Endgerätes konfiguriert.

16. Verfahren nach Anspruch 15, **dadurch gekennzeichnet, dass** jede der Dienststeuerversionen ein unterschiedliches Aussehen der graphischen Benutzerschnittstelle zusammen mit derselben order unterschiedlichen, lokalen Anwendung und Funktionalität hat.

17. Verfahren nach einem der Ansprüche 10 bis 16, **dadurch gekennzeichnet, dass** vorher aufgezeichnete Dienstbenutzerwechselwirkungen von Systemdateien zurückgespielt werden, um das Teledienstverwaltungssystem zu prüfen oder um Verwendung von Telediensten benutzerfreundlicher zu machen.

18. Verfahren nach Anspruch 17, **dadurch gekennzeichnet**, das Antworten, die durch Dienstbenutser gegeben werden, unter Verwendung einer Skriptsprache emuliert werden, die Information berücksichtigt, die durch die graphische Dienststeuerbenutzerschnittstelle angezeigt wird.

19. Verfahren nach einem der Ansprüche 10 bis 18, **dadurch gekennzeichnet, dass** die graphische Dienststeuerbenutzerschnittstelle einen Teledienst von generischen Komponenten aufgrund einer Beschreibung des Teledienstes und seiner Konfiguration aufbaut.

## Revendications

1. Système de gestion de service à distance, adapté afin de supporter la fourniture d'une pluralité de services à distance et comportant un terminal d'utilisateur de service présentant des moyens adaptés afin d'afficher une interface graphique d'utilisateur de commande de service entre un utilisateur de service et ledit système de gestion de service à distance, ladite interface graphique d'utilisateur de commande de service assurant la représentation et la configuration de : ressources de terminal, ressources de réseau et d'une application requise afin d'assurer la fourniture d'un service à distance, de même qu'un état courant et des fonctions disponibles du service à distance pour l'utilisateur de service, et la transmission et la présentation de messages entre des terminaux d'utilisateur sur un réseau de télécommunication, **caractérisé en ce que** ledit réseau comporte une première base de données adaptée afin de mémoriser différentes versions de commande de service du même service à distance, une deuxième base de données adaptée de mémoriser des composants génériques de commande de service, et des moyens de sélection et de construction de commande de service associés à une partie de réseau dudit système de gestion de service à distance et disposant d'un accès aux dites première et deuxième bases de données.

2. Système de gestion de service à distance selon la revendication 1, **caractérisé en ce que** ledit système de gestion de service à distance est en deux parties, une partie de terminal agencée dans chacun desdits terminaux et une partie de réseau agencée dans ledit réseau de télécommunications, **en ce que** chacun desdits terminaux comporte un pile de protocole de réseau adaptée de manière à interagir avec ladite partie de terminal, un système d'exploitation pour ladite partie de terminal et ladite interface graphique d'utilisateur, et **en ce que** ladite application, aussi agencée dans la partie de terminal, est adaptée de manière à interagir avec l'utilisateur de service et ladite partie de terminal à travers la présentation d'informations qui sont délivrées par le service à distance à l'utilisateur et à collecter es informations qui doivent être délivrées à partir de l'utilisateur.

3. Système de gestion de service à distance selon la revendication 1, **caractérisé par le fait que** ladite interface graphique d'utilisateur de commande de service est adaptée de manière à :
- rechercher les spécifications, et actions de commande, de l'utilisateur de service par rapport aux paramètres du service à distance.

4. Système de gestion de service à distance selon les revendications 1 ou 2, **caractérisé par le fait que** ledit système comprend des dispositifs destinés à permettre à un utilisateur de service d'exécuter des actions de commande, par rapport à une session de service à distance, en utilisant des menus générés par ladite interface graphique d'utilisateur de commande de service.

5. Système de gestion de service à distance selon la revendication 4, **caractérisé par** des dispositifs destinés à transformer une qualité de service exprimée en une image d'une certaine taille.

6. Système de gestion de service à distance selon la revendication 5, **caractérisé par le fait que** ladite partie de terminal dudit système de gestion de service à distance comprend des dispositifs destinés à configurer lesdits gestionnaires d'application et de réseau de ladite pile de protocole de réseau.

7. Système de gestion de service à distance selon la revendication 6, **caractérisé par le fait que** ladite partie de terminal dudit système de gestion de service à distance comprend des dispositifs destinés à configurer ledit système d'exploitation.

8. Système de gestion de service à distance selon l'une quelconque des revendications précédentes, **caractérisé par le fait que** ledit système comprend des dispositifs destinés à permettre la reproduction d'exécution d'interactions d'utilisateur de service préalablement enregistrées à partir de fichiers systèmes afin de tester ledit système de gestion de service à distance, ou de rendre les services à distance d'utilisation plus conviviale.

9. Système de gestion de service à distance selon la revendication 8, **caractérisé par le fait que** ledit système comprend un simulateur destiné à simuler, par un langage à base de script destiné à prendre en compte des informations affichées par ladite interfaces graphique d'utilisateur de commande de service, des réponses données par des utilisateurs de service.

10. Procédé de gestion d'une pluralité de services à distance en utilisant un système de gestion de service à distance comportant un terminal d'utilisateur de service présentant des moyens adaptés afin d'afficher une interface graphique d'utilisateur de commande de service entre un utilisateur de service et ledit système de gestion de service à distance, au moyen de ladite interface graphique d'utilisateur de commande de service comprenant :
- la représentation et la configuration : de ressources de terminal, de ressources de réseau, et d'une application requise afin d'assurer la fourniture d'un service à distance, de même que d'un état courant et de fonctions du service à distance disponibles à l'utilisateur de service ; et
- la transmission et la présentation de messages entre des terminaux d'utilisateur sur un réseau de télécommunication, **caractérisé par** la sélection par ledit utilisateur de service d'une commande de service désirée à partir de différentes versions de commande de service du même service à distance, après le début d'une nouvelle session, ou après avoir été invité à faire ainsi, en mémorisant différentes versions de commande de service du même service à distance dans une première base de données, en mémorisant des composants génériques de commande de service dans une deuxième base de données, et en agençant des moyens de sélection et de construction de commande de service avec un accès aux deux bases de données.

11. Procédé selon la revendication 10, **caractérisé par** l'exécution par ladite interface graphique d'utilisateur de commande de service des tâches suivantes :
- de présentation de l'état réel, et des fonctions disponibles, d'un service à distance à l'utilisateur de service ;
- de recherche des spécifications, et actions de commande, de l'utilisateur de service en ce qui concerne les paramètres du service à distance ; et
- de réception et de présentation des messages individuels qui sont associés à la session de service à distance.

12. Procédé selon la revendication 10 ou la revendication 11, **caractérisé par** l'utilisation par l'utilisateur de service des menus générés par l'interface graphique d'utilisateur de commande de service afin d'exécuter des actions de commande par rapport à une session de service à distance.

13. Procédé selon la revendication 12, **caractérisé par** l'expression d'une qualité de service par ledit utilisateur de service en exigeant une image d'une certaine taille.

14. Procédé selon l'une quelconque des revendications 10 à 13, **caractérisé par le fait que** ledit système de gestion de service à distance est en deux parties, une partie de terminal et une partie de réseau, en ce que chaque terminal comporte un pile de protocole de réseau adaptée de manière à interagir avec la partie de terminal et en ce que ladite partie de terminal assure la configuration des gestionnaires d'application et de réseau de la pile de protocole du réseau dudit terminal.

15. Procédé selon la revendication 14, **caractérisé par** la configuration par ladite partie de terminal dudit système de gestion de service à distance du système d'exploitation dudit terminal.

16. Procédé selon la revendication 15, **caractérisé par le fait que** chacune desdites versions de commande de service présente une conception d'interface graphique d'utilisateur différente, ensemble avec des application locale et fonctionnalité identiques ou différentes.

17. Procédé selon l'une quelconque des revendications 10 à 16, **caractérisé en ce que** des interactions d'utilisateur de service enregistrées préalablement sont exécutées de nouveau à partir de fichiers systèmes afin de tester le système de gestion de service à distance, ou de rendre l'utilisation de services à distance plus conviviale.

18. Procédé selon la revendication 17, **caractérisé par** la simulation de réponses données par des utilisateurs de service en utilisant un langage par script qui prend en compte les informations affichées par ladite interface graphique d'utilisateur de commande de service.

19. Procédé selon l'une quelconque des revendications 10 à 18, **caractérisé par** la construction par ladite interface graphique d'utilisateur de commande de service d'un service à distance à partir de composants génériques sur la base d'une description du service à distance et de sa configuration.
